# NOUVEAU FASCICULE DE BREVET EUROPEEN

(11) **EP 0 696 010 B2**
(45) Date de publication et mention de la décision concernant l'opposition: **02.07.2003**
(45) Mention de la délivrance du brevet: 26.08.1998
(21) Numéro de dépôt: 95401641.6
(22) Date de dépôt: 07.07.1995
(51) Int. Cl.: G06K 7/06, G06K 19/077

(54) **Interface portable pour carte à puce électronique**
Tragbare Schnittstelle für elektronische Chipkarte
Portable interface for electronic chip card

(30) Priorité: 13.07.1994 FR 9408722; 20.02.1995 FR 9501913
(43) Date de publication de la demande: 07.02.1996
(73) Titulaire: SCHLUMBERGER Systèmes, 92120 Montrouge (FR)
(72) Inventeur: Potdevin, Jean-Marc, F-91470 Forges Les Bains (FR); Morgan, Andrew, F-92220 Bagneux (FR); Bizet, Bruno, F-71000 Macon (FR)
(74) Mandataire: Desrousseaux, Grégoire Marie

(56) Documents cités:
- EP-A- 0 385 022
- EP-A- 0 552 078
- EP-A- 0 564 105
- EP-A- 0 605 204
- WO-A-90/04239
- FR-A- 2 696 863
- FR-A- 2 698 469
- US-A- 5 296 692
- Card Wave, Japan, octobre 1992, pp. 46-48

## Description

La présente invention concerne une interface portable pour une ou plusieurs cartes à puce électronique, ladite interface assurant la liaison entre les cartes à puces électronique avec un lecteur de carte du type comportant un boîtier de forme sensiblement parallélipédique rectangle se terminant par un connecteur à broches enfichable dans le lecteur, telles que par exemple les cartes du type PCMCIA.

Par la suite on désignera par cartes à puce, les cartes de forme rectangulaire bien connues du grand public telles que les cartes bancaires, les cartes de prépaiement (pour le téléphone public par exemple), les cartes d'accès à des locaux, etc.... Le format de ces cartes est normalisé ; la puce électronique est située à un endroit précis sur la surface principale de la carte et ses dimensions sont d'environ 85 x 54 x 1 mm.

Il est de plus en plus courant d'utiliser à la place des disquettes pour ordinateurs, des cartes de mémoires électroniques ayant le format d'une carte à puce mais d'épaisseur plus grande. Le boîtier de ces cartes, de format sensiblement rectangulaire, est d'environ 85 mm par 54 mm, l'épaisseur étant uniformément de 3,3 mm (type 1), ou étant de 3,3 mm avec une partie centrale plus épaisse (5 mm, type 2) ou encore d'épaisseur 10 mm (type 3). L'extrémité du boîtier se termine par un connecteur du type femelle à 68 broches. Ce type de carte a été normalisée selon la norme dite PCMCIA qui signifie en anglais "Personal Computer Memory Card International Association". Ces mémoires sont très pratiques car d'une part leur format de poche les rend très facilement transportable et d'autre part elles peuvent avoir une capacité mémoire importante qui peut atteindre plusieurs dizaine de méga-octets. La plupart des matériels informatiques, et notamment des ordinateurs portables, comportent un lecteur de cartes du type PCMCIA.

Une fois enfiché dans le lecteur, la carte peut servir d'extension mémoire de l'ordinateur ou remplir d'autres fonctions telles que entrées/sorties, modem ou stockage de masse. Par la suite, on entend par carte PCMCIA, non seulement toutes les cartes qui sont effectivement conforme à la norme PCMCIA mais aussi toutes les cartes semblables, de forme sensiblement parallélipédique rectangle, terminées à une extrémité par un connecteur.

Du fait de l'utilisation de plus en plus répandue des cartes et des lecteurs du type PCMCIA, il s'est avéré utile de pouvoir faire lire par un lecteur du type PCMCIA des cartes à puce. Ces dernières comportent soit des circuits mémoire soit un microprocesseur associé à des circuits mémoire. Leur utilisation est de plus en plus étendue. Les cartes à puce et les cartes de type PCMCIA sont normalaisées aux mêmes dimensions : elles ont la même largeur et la même longueur. Mais leur épaisseur varie : l'épaisseur d'une carte à puce électronique est d'environ 1 mm alors que l'épaisseur d'une carte PCMCIA varie de 3,3 à 10 mm. Une autre différence réside dans le fait que les mémoires, sous forme de circuits intégrés, de la carte PCMCIA sont incluses à l'intérieur de la carte elle-même et la carte comporte à son extrémité un connecteur à broches, alors que la carte à puce comporte un circuit intégré et des plages de contact situés à des endroits bien précis sur la surface principale de la carte. Il en résulte que les lecteurs de carte PCMCIA ne peuvent pas lire les cartes à puce, et réciproquement, sans modification du lecteur.

On connaît déjà des lecteurs de cartes particuliers qui permettent de lire indifféremment des cartes à puce et des cartes du type PCMCIA. Ces lecteurs comportent généralement un plateau, qui permet de s'adapter à la différence d'épaisseur des cartes, ainsi que des connecteurs électriques des deux types, soit PCMCIA, soit carte à puce. A titre d'exemple, la demande de brevet FR 2 687 238 et le brevet US 5 198 645 décrivent ce type de lecteur.

Une autre solution décrite dans la demande de brevet EP 0 552 078, consiste à diminuer l'épaisseur d'une carte PCMCIA et à l'équiper d'un connecteur supplémentaire à contacts affleurants sur sa face principale. On remarque que dans un tel système les deux cartes, carte à puce et carte PCMCIA, sont superposées dans le lecteur. Les deux cartes ayant la même largeur peuvent être guidées dans le lecteur de carte par le système de guidage et de positionnement du lecteur. Cependant ce dernier est conçu pour une carte de type PCMCIA et pas pour l'empilement d'une carte à puce avec une carte PCMCIA. Il s'en suit un manque de précision du positionnement de la carte à puce. De plus, lorsque l'on cherche à introduire la carte à puce dans un lecteur de carte contenant déjà une carte PCMCIA dont on a diminué l'épaisseur, il peut se produire des fausses manoeuvres dues au fait que l'espace restant pour accueillir la carte à puce est relativement réduit. On remarque également que l'espace disponible pour accueillir des composants électroniques, tels que des mémoires, à l'intérieur de la carte PCMCIA d'épaisseur réduite est largement diminuée par rapport à l'espace disponible dans une carte PCMCIA classique. On ne peut donc pas loger autant de composants électroniques à l'intérieur d'une carte d'épaisseur réduite que dans une carte PCMCIA d'épaisseur normale. De plus, un tel système ne permet de lire qu'une seule carte à puce alors que pour certaines applications plusieurs cartes auraient besoin d'être lues par le lecteur de carte simultanément.

Une autre solution est proposée par le brevet US 5 296 692 qui décrit un adaptateur pouvant être inséré dans un lecteur. L'adaptateur comporte un réceptacle pouvant recevoir une carte du type PCMCIA et une carte à puce, ces cartes étant superposées, l'une au-dessus de l'autre. Il en résulte que la fente par laquelle on introduit les cartes a une largeur supérieure à celle des lecteurs de cartes classiques et que l'adaptateur n'a pas des dimensions standard et ne peut pas être utilisé directement avec un lecteur de cartes de type PCMCIA.

La présente invention propose une interface portable entre une ou plusieurs cartes à puce et un lecteur de carte du type PCMCIA qui n'a pas les inconvénients des systèmes de l'art antérieur.

Une interface apte à connecter plusieurs cartes IC à un ordinateur est décrite dans la demande de brevet européen EP 0 395 022.

Une interface portable pour une carte à puce est décrite dans la demande de brevet français FR 2 698 469.

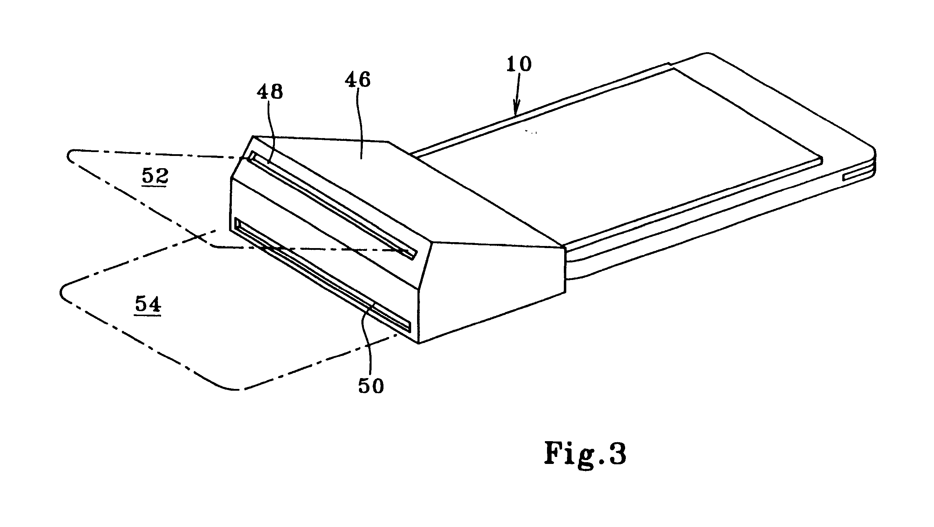

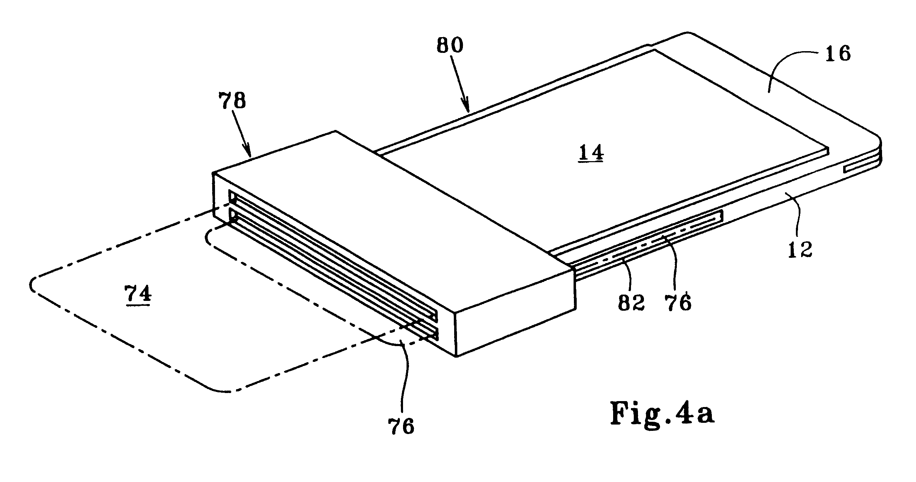

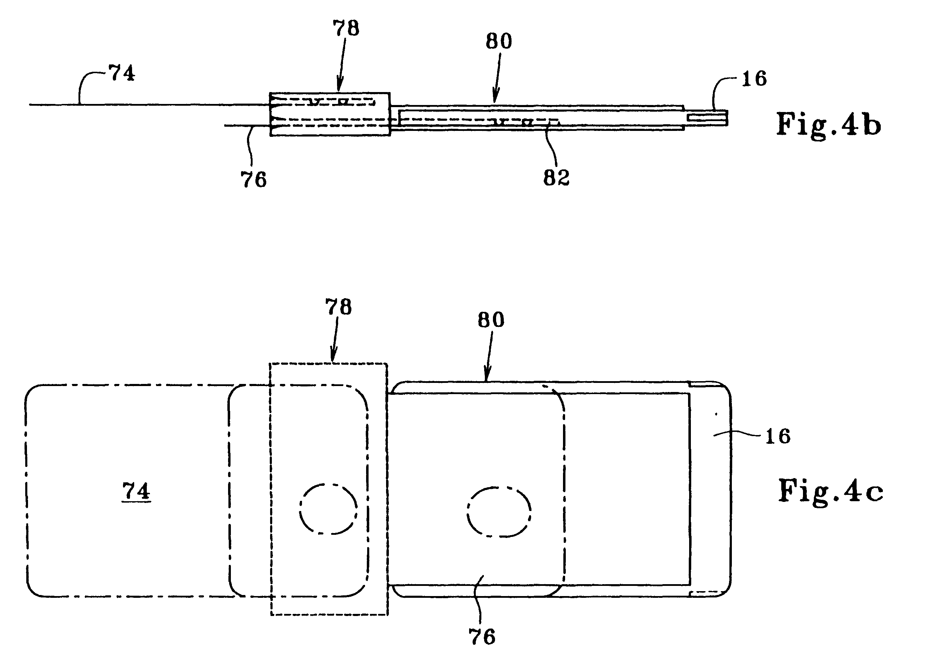

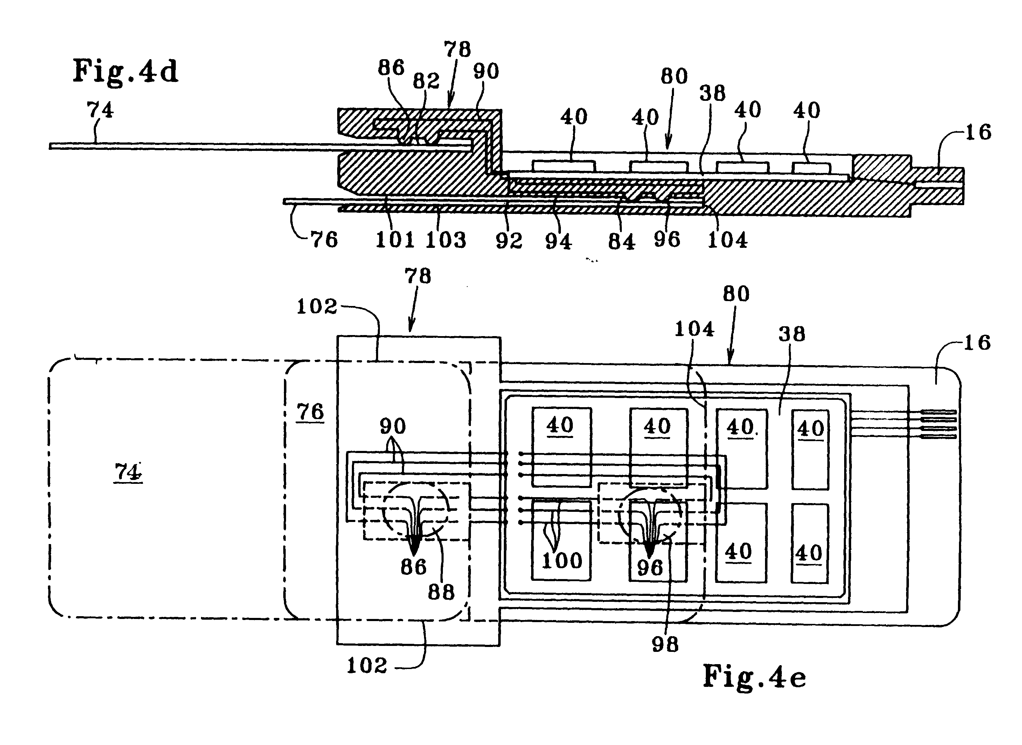

Card Wave, octobre 1992 décrit à la figure 3 une carte à puce qui peut être insérée dans la fente d'une carte à mémoire, en prévoyant une douille de maintien de la carte à puce. La figure 4 de ce doument montre le système proprosé dans EP-A-0 522 078.

La présente invention est défini par les caractéristiques de la revendication 1.

Les moyens de guidage et de positionnement sont avantageusement constitués par les bords latéraux, par les surfaces internes supérieur et inférieure et par le fond du logement.

Le logement peut être soit entièrement contenu à l'intérieur de l'embout ou traverser de part en part l'embout en se prolongeant dans le module.

L'interface selon l'invention peut comporter deux ou plusieurs logements superposés, chacun d'eux pouvant accueillir une carte à puce. Les logements peuvent être orientés selon des plans sensiblement parallèles ou selon des plans sécants. Lorsque l'interface comporte deux logements, l'un peut être entièrement contenu à l'intérieur de l'embout alors'que l'autre traverse de part en part l'embout en se prolongeant dans le module. Un ensemble de circuits intégrés situé dans le module peut être prévu pour relier les moyens de connexion électrique aux moyens enfichables de liaison électrique avec le lecteur de cartes.

L'interface selon l'invention peut également comprendre un seul logement ayant une fente apte à accueillir plusieurs cartes à puce électronique. De préférence, le logement devient plus étroit suivant la longeur de l'interface afin que les cartes à puce insérées dans le logement en utilisation soient décalées l'une par rapport à l'autre.

Le module et l'embout peuvent avantageusement être formés d'une seule pièce, par exemple un corps creux en plastique moulé d'une seule pièce et comprenant un couvercle qui peut être métallique et d'épaisseur très fine.

L'invention sera mieux comprise à l'aide de la description qui suit de plusieurs modes de réalisation de l'invention faite en référence aux dessins qui l'accompagnent dans lesquels :

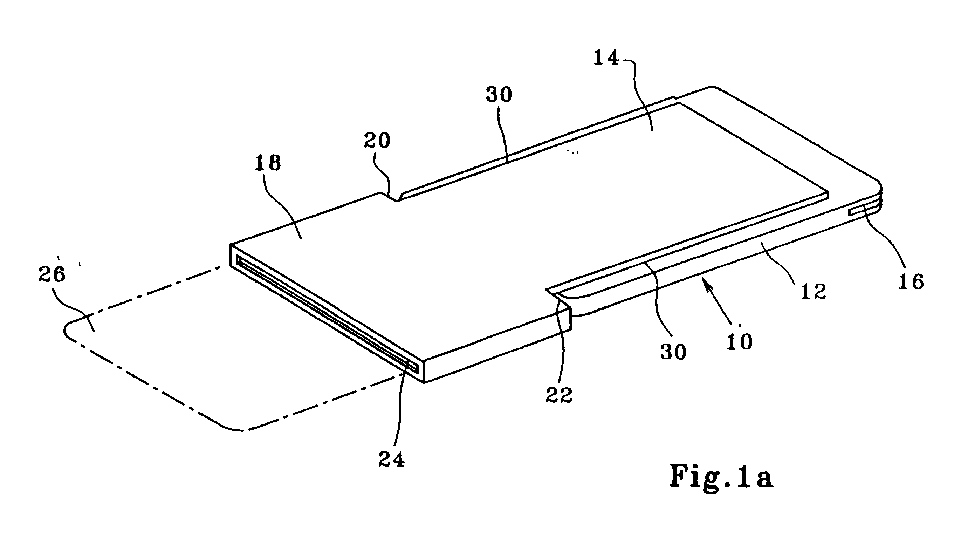

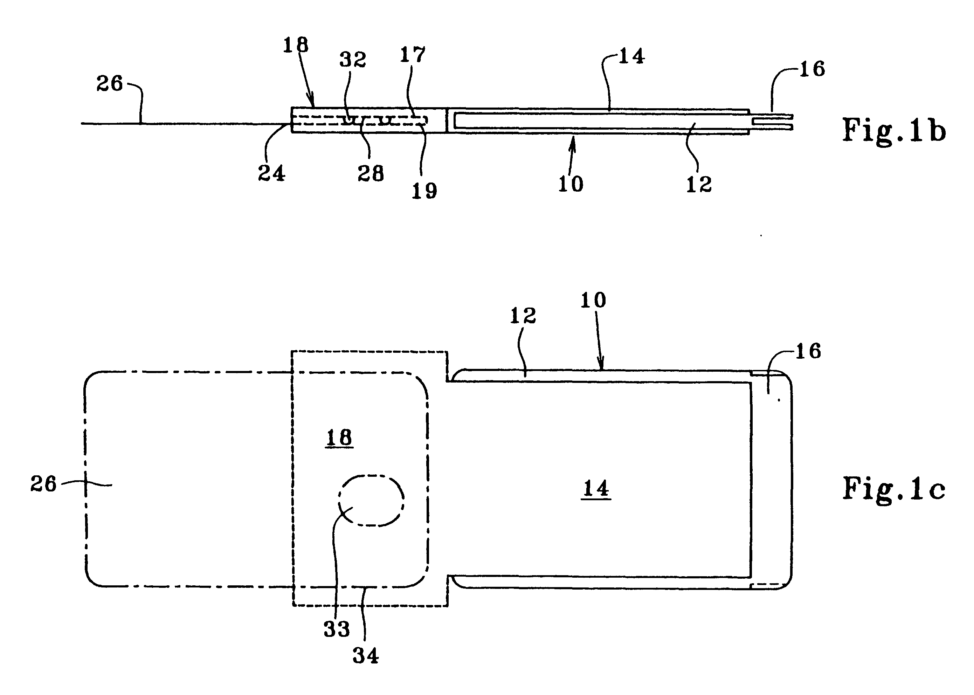

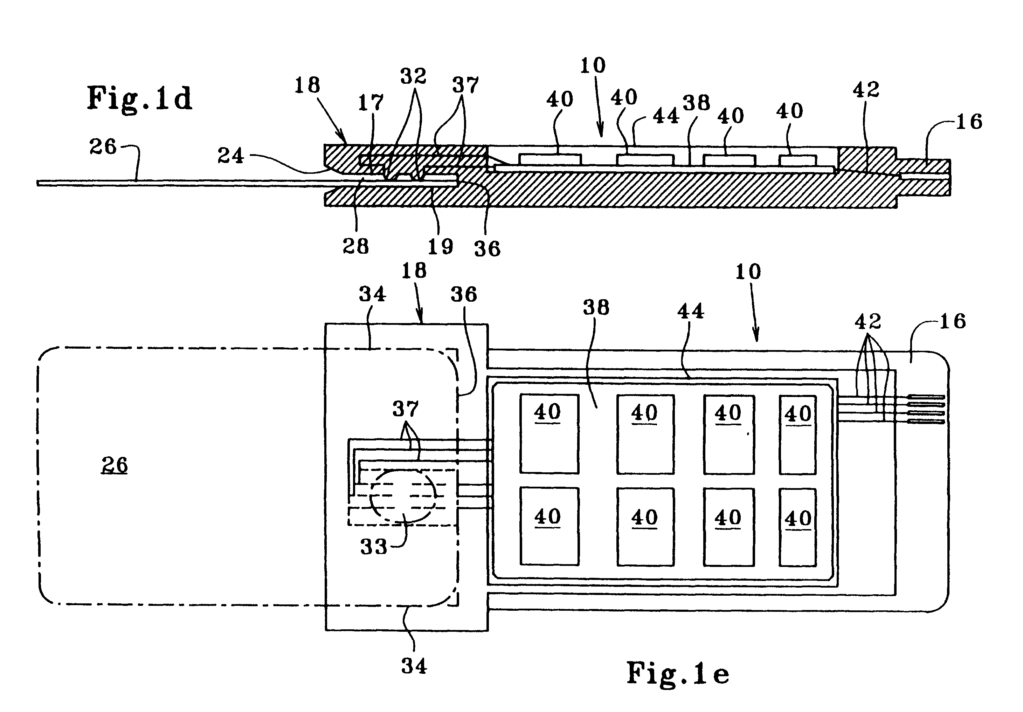

- les figures 1 représentent un mode de réalisation de l'invention qui permet d'introduire une seule carte à puce dans l'interface, la figure 1a étant une vue en perspective, les figures 1b et 1c représentant respectivement une vue de coté et de haut, et les figures 1d et 1e représentant des coupes selon deux plans perpendiculaires;

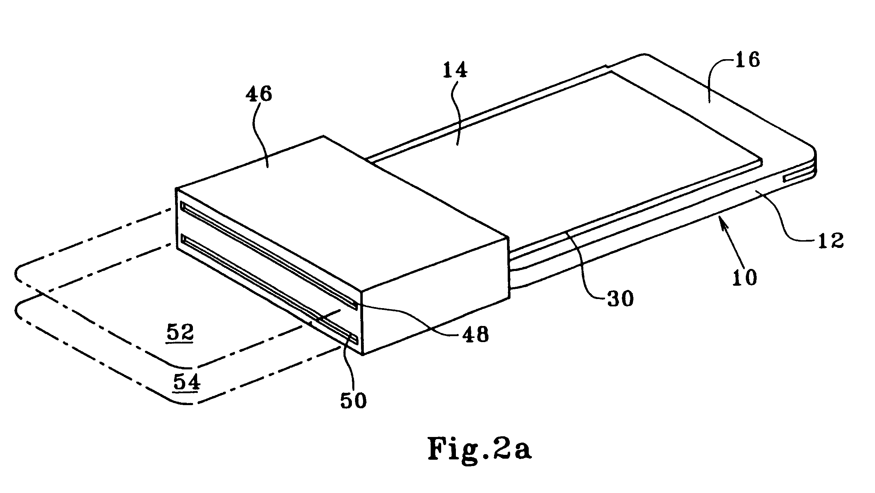

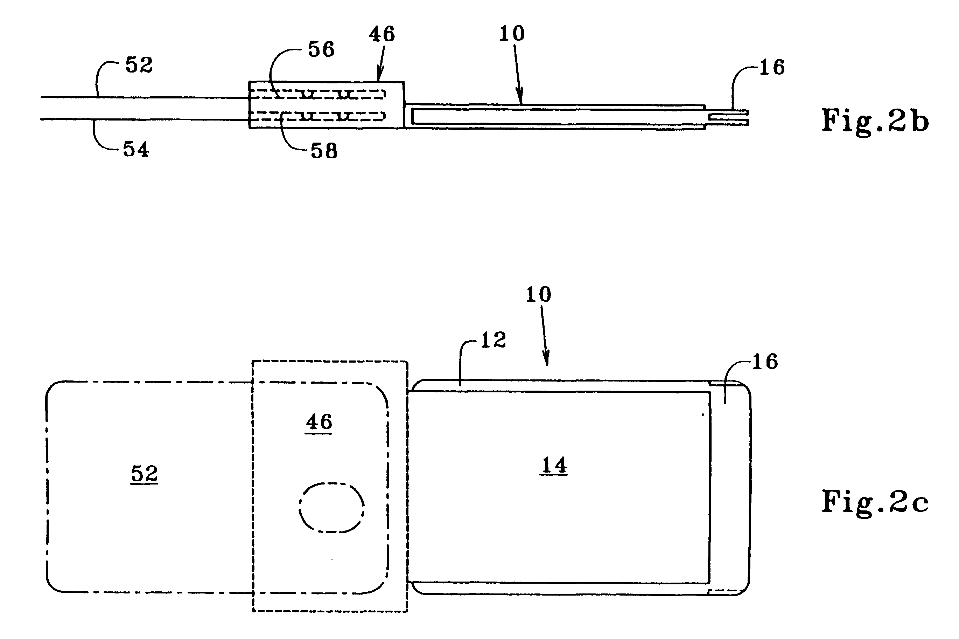

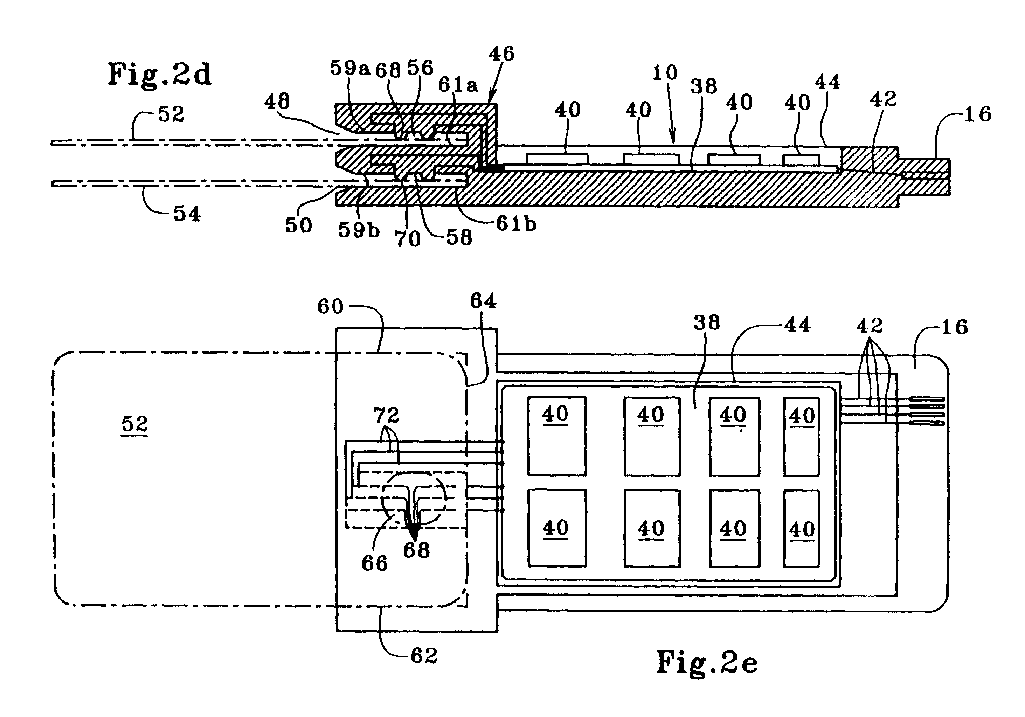

- les figures 2 représentent un exemple non couvert par l'invention, en ce qu'il presente un embout d'épaisseur supérieure au module avec deux cartes à puce toutes deux logées uniquement dans l'embout et de façon parallèle, la figure 2a étant une vue en perspective, les figures 2b et 2c étant respectivement une vue de coté et de haut et les figures 2d et 2e représentant des coupes selon deux plans perpendiculaires;
- la figure 3 représente en perspective un exemple non couvert par l'invention, en ce qu'il presente un embout d'épaisseur supérieure au module avec deux cartes à puce situées dans deux plans sécants;
- les figures 4 représentent un exemple non couvert par l'invention, en ce qu'il presente un embout d'épaisseur supérieure au module avec deux cartes, l'une étant logée dans l'embout uniquement et l'autre étant logée entièrement dans l'embout et en partie dans le module, la figure 4a étant une vue en perspective, les figures 4b et 4c une vue respectivement de coté et de haut et la figure 4d et 4e des coupes selon deux plans perpendiculaires;

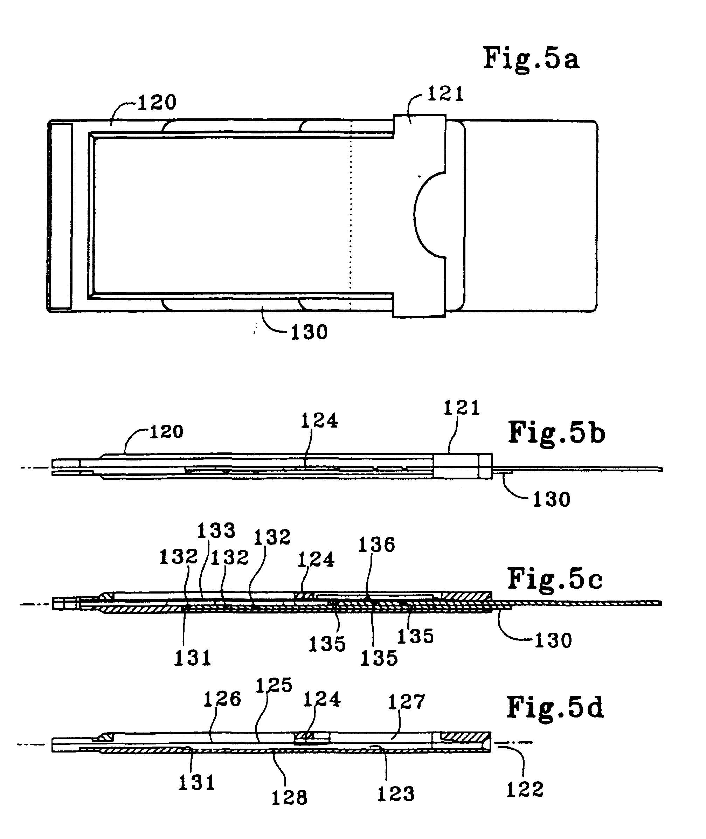

- les figures 5 représentent un autre mode de réalisation avec deux cartes et ayant un seul logement pour les accueillir, la figure 5a étant une vue de haut, la figure 5b étant une vue de coté, et les figures 5c et 5d étant des coupes selon deux plans perpendiculaires, avec et sans cartes, respectivement.

Le mode de réalisation représenté sur les figures 1 permet d'introduire une seule carte à puce dans l'interface. Ce dernier est constitué d'un module qui a la forme géométrique et les dimensions d'une carte PCMCIA du type 2. Les modes de réalisations représentés et décrits par la suite comportent un module ayant l'aspect extérieur d'une carte PCMCIA type 2. Cependant le module 10 peut avoir l'aspect d'une carte PCMCIA du type 1, 2 et 3 indifféremment. Les cartes PCMCIA du type 1 ont une forme rectangulaire d'épaisseur 3,3 mm; celles du type 2 ont la même épaisseur de 3,3 mm sur les bords mais comportent une partie centrale 14 surélevée délimitée par les bords 30, l'épaisseur totale de la carte à cet endroit étant de 5 mm. Comme toute carte PCMCIA, le module comporte à l'une de ses extrémités des moyens enfichables 16 composés d'une broche femelle à 68 connexions. Cette broche 16 est enfichable dans la connexion mâle du lecteur de carte (non représenté). La longueur du module 10 est d'environ 8,5 cm et sa largeur est d'environ 5,4 cm. Ces dimensions correspondent sensiblement aux dimensions des cartes à puce. Un embout 18 est fixé à l'extrémité du module 10 opposé au connecteur 16. Cet embout 18 alaforme d'un parallélépipède rectangle de même épaisseur que le module 10 dans sa partie centrale 14. La largeur de l'embout 18 est légèrement supérieure à celle du module 10 et donc supérieure à la largeur d'une carte du type PCMCIA ou d'une carte à puce. Les parties saillantes 20 et 22 de l'embout forment une butée contre la face du lecteur de carte lorsque l'interface est introduite dans le lecteur. L'embout comporte une fente 24 qui permet d'introduire une carte à puce 26 à l'intérieur d'un logement 28 situé dans l'embout. Les bords 12 de la partie centrale 14 du module 10 servent généralement de moyens de guidage de la carte PCMCIA lors de son introduction dans le lecteur de carte.

Les figures 1b et 1c sont des vues respectivement de coté et de haut du mode de réalisation représenté sur la figure 1a. Les mêmes éléments ont été représentés par les mêmes références (il en sera de même par la suite pour les autres modes de réalisation). Seul le dessus de l'interface est visible sur la figure 1a; on s'aperçoit cependant sur la figure 1b que le dessous de l'interface a la même forme que le dessus. On retrouve donc une partie centrale 14 du module 10 qui est plus épaisse que les bords 12. Sur la figure 1b apparaissent des moyens de connexion électrique 32 destinés à venir en contact avec des plages de contact électrique 33 de la carte à puce (figure 1c).

La carte à puce 26 est introduite dans le logement 28 (figure 1d et 1e) situé dans l'embout 18. Cette carte est guidée et positionnée par des moyens de guidage et de positionnement.

Dans les exemples illustrés dans les figures, les moyens de guidage et de positionnement sont constitués par les surfaces solides définissant le logement lui-même, c'est-à-dire par les bords latéraux 34 (figure 1e) du logement 28 et par les surfaces internes supérieure 17 et inférieure 19 du logement 28. Ce dernier a une forme rectangulaire de largeur et de hauteur très légèrement supérieure (de quelques dixièmes de millimètres) à celle de la carte à puce 26 de sorte que la carte est guidée lorsqu'elle est introduite. La profondeur du logement 28 est suffisamment grande pour que les bords latéraux 34 et les surfaces 17 et 19 servent de façon efficace de moyens de guidage et de positionnement de la carte à puce à l'intérieur du logement. Cette profondeur est avantageusement égale ou supérieure à trois centimètres. Le fond 36 du logement 28 sert à positionner la carte à puce lorsque cette dernière vient en butée contre le fond 36. Dans ce cas, une pluralité de contacteurs affleurants 32 sont situés en regard et en contact avec des plages de contact 33 situées sur la surface de la carte à puce. Chaque contacteur affleurant 32 a la forme d'une lame élastiquement déformable, solidaire de l'embout 18 et présentant une extrémité incurvée pour entrer en contact avec une plage de la carte. Les contacteurs 32 sont reliés par des fils électriques 37 à un circuit imprimé 38 logé à l'intérieur du module 10. Ce circuit imprimé 38 comprend plusieurs éléments électroniques 40, tels que des circuits intégrés. La liaison entre le circuit imprimé 38 et le connecteur 16 est de préférence une liaison directe représentée schématiquement par 42 sur les figures 1d et 1e, à savoir que les sorties du circuit imprimé 38 sont directement soudés aux bornes du connecteur 16.

Le circuit imprimé 38 avec ses composants électroniques 40 peut remplir différentes fonctions. Tout d'abord, il contient des circuits dédiés à la gestion électronique de la carte à puce 26, ainsi que son alimentation électrique et signaux d'horloge. Cette gestion peut être l'échange de données entre la carte à puce et l'appareil auquel l'interface est connectée ou encore le traitement des données fournies par la carte à puce avant le transfert de ces données ainsi traitées à l'appareil auquel est connectée l'interface.

Le circuit peut également remplir d'autres fonctions, telles que le stockage d'information sur mémoire de masse ou sur mémoire à état solide - volatiles ou non, l'augmentation de la capacité mémoire de l'ordinateur dans lequel l'interface est connectée ou des fonctions d'entrées-sorties telles qu'interfaces réseau, interfaces de télécommunications ou interface avec tout autre type d'appareils. Dans ce cas, ces fonctionnalités supplémentaires peuvent bénéficier de la présence simultanée d'une ou plusieurs carte(s) à puce pour, par exemple, assurer la sécurisation de l'accès aux données ou aux réseaux, pourvérifier des droits d'utilisation, pour signer ou chiffrer une transaction, ou pour payer l'utilisation des fonctions ou services offerts par le circuit.

Dans les modes de réalisation préférés et les exemples représentés sur les figures 1 à 4 le module 10 et l'embout 18 ne forment qu'une seule pièce afin d'augmenter la robustesse globale de l'interface. Cette pièce est avantageusement moulée dans une matière plastique dans laquelle on a aménagé l'espace intérieur du module pour contenir le circuit imprimé 38 avec ses composants 40. Cet espace est fermé à l'aide d'un couvercle 44, de préférence métallique et de très faible épaisseur, fixé sur le module 10. Ce couvercle permet de pouvoir installer le circuit imprimé 38 et d'accéder à ce circuit si nécessaire. Le logement 2B est également aménagé dans la pièce en plastique formé par le module 10 et l'embout 18. Les connecteurs 32 sont pré-installés dans l'embout 18 ainsi que les fils de jonction 37.

Dans le mode de réalisation de la figure 1, le logement 28 de la carte à puce est entièrement contenu à l'intérieur de l'embout 18. Les figures 2a à 2e représentent un exemple non couvert par l'invention, en ce qu'il presente un embout d'épaisseur supérieure au module, d'une interface assurant la connexion de deux cartes à puce avec un lecteur de carte du type PCMCIA. L'embout 46 comporte deux fentes 48 et 50 par lesquelles sont insérées les cartes à puce respectivement 52 et 54. L'embout 46 est d'épaisseur plus importante que dans le mode de réalisation des figures 1. Cette épaisseur est d'environ 1 cm. Le module 10 est identique à celui des figures 1. Il a ainsi la forme et la dimension d'une carte de type PCMCIA du type 2 à savoir que sa partie centrale 14 est plus épaisse (environ 5 mm) que sur les bords 12 du module (environ 3,3 mm). Il comporte aussi à son extrémité opposée à celle du module 46 un connecteur à broches enfichables 16. Sur les figures 2b et 2c qui représentent une vue respectivement de coté et de dessus, on remarque que l'embout 46 comporte deux logements 56 et 58 contenus dans l'embout 46. Ces logements ont une forme rectangulaire et de largeur très légèrement supérieure (de quelques dixièmes de millimètre) à la largeur standardisée des cartes à puce (figures 2d et 2e). De ce fait, les bords latéraux 60 et 62 des deux logements identiques 56 et 58 servent de moyens de guidage et de positionnement des deux cartes à puce 52 et 54. Il en est de même des surfaces internes supérieurs 59a et 59b et inférieures 61a et 61b des logements 56 et 58 respectivement, la hauteur de ces logements étant très légèrement supérieure (de quelques dixièmes de millimètres) à l'épaisseur d'une carte à puce. Le fond 64 de chacun des deux logements 56 et 58 est également utilisé comme moyen de positionnement en profondeur. Lorsque les cartes sont en place dans les logements, les plages de contact électrique 66 sont en regard des contacteurs affleurants 68 et 70. Les logements 56 et 58 sont orientés selon deux plans parallèles, de telle sorte que les deux cartes 52 et 54 sont parallèles entre elles lorsqu'elles sont introduites dans les logements. Des fils électriques 72 relient les contacteurs 68 70 au circuit imprimé 38. Ce circuit contient des composants électroniques 40 comme indiqué précédemment ainsi que des contacts de liaison 42 avec la broche du connecteur en-fichable 16.

Comme dans le mode de réalisation des figures 1, ainsi que dans les exemples décrits ci-après, l'embout 46 et le module 10 sont avantageusement formés d'une seule pièce moulée (afin d'augmenter la robustesse de l'interface), munie d'un couvercle 44.

La figure 3 représent un exemple identique à celui représenté sur les figures 2, sauf en ce qui concerne l'orientation des logements 56 et 58 de l'embout 48. Lorsque les deux logements sont relativement proches l'un de l'autre, il se peut qu'il soit difficile d'introduire ou de retirer l'une des deux cartes à puce 52 et 54 lorsque l'une d'entre elles est déjà dans son logement. Pour éviter cet inconvénient, les deux logements 56 et 58 sont orientés selon deux plans sécants. En d'autres mots, les deux cartes à puce 52 et 54 sont dans deux plans sécants, convergent vers le module 10, de telle sorte que les deux extrémités extérieures des deux cartes sont distantes l'une de l'autre d'une distance plus grande que la distance séparant les deux fentes 48 et 50. De cette façon, il est plus facile d'introduire ou de retirer les cartes 52 et 54.

L'exemple représenté sur les figures 4 permet de connecter deux cartes à puce 74 et 76 à un lecteur de carte de type PCMCIA. Il diffère de l'exemple représenté sur les figures 2 par le fait que l'un des deux logements destinés à accueillir les cartes à puce est entièrement contenu dans l'embout 78 alors que l'autre logement traverse de part en part cet embout et se prolonge dans le module 80. Les dimensions et la forme extérieure de l'interface sont identiques à celles de l'example de la figure 2. Le module 80 comprend de la même façon un connecteur à broches 16 et une partie centrale 14 d'épaisseur plus importante que les bords 12. Par contre, le module 80 comprend une fente latérale 82 qui permet le passage de la carte à puce 76. Cette fente est évidemment nécessaire puisque les largeurs de la carte à puce et du module 80 sont sensiblement identiques. Les deux logements 82 et 84 (figure 4d) sont situés dans des plans sensiblement parallèles. On pourrait bien entendu concevoir aisément que ce ne soit pas le cas comme dans l'exemple de la figure 3, le logement 82 étant alors incliné par rapport au logement 84. Le logement 82 est entièrement contenu dans l'embout 78. Les bords latéraux, les surfaces internes supérieure et inférieur et le fond du logement servent de moyens de guidage et positionnement de la carte 74 comme dans les exemples précédents. Des contacteurs électriques affleurants 86 sont placés dans le logement 82 de telle sorte que lorsque la carte à puce 74 est en position, les plages de contact 88 de la carte à puce sont en regard des contacteurs 86. Des fils électriques 90 relient les contacteurs 86 au circuit imprimé 38 du module 80.

Le logement 84 comprend une première partie 92 qui traverse de part en part l'embout 78 et qui se prolonge par une partie 94 dans le module 80. Dans cette partie 94 se trouve des contacteurs affleurants 96 qui sont situés en regard les plages de contact 98 de la carte à puce lorsque cette dernière est en position dans le logement 84. Des fils électriques 100 relient les contacteurs 96 au circuit imprimé 38. Les contacteurs 96 peuvent également être directement soudés sur le circuit imprimé 38. Le guidage de la carte 76 au cours de son introduction dans le logement 84 est effectué à l'aide des bords latéraux 102 et des surfaces internes supérieure 101 et inférieure 103 de la partie 92 du logement 84 se trouvant dans l'embout 78. Ces bords 102 et ces surfaces 101 et 103 sont parallèles entre eux et situés à une distance l'un de l'autre très légèrement supérieure respectivement à la largeur et à l'épaisseur d'une carte à puce. Le positionnement en profondeur de la carte est effectué à l'aide du fond 104 du logement 84.

Comme dans les exemples précédents, l'embout 78 et le module 80 sont formés d'une seule pièce de préférence en plastique moulé.

L'exemple de la figure 4 est particulièrement intéressant lorsque l'on veut utiliser simultanément 2 cartes à puce dont une, la carte 76, reste pour un temps beaucoup plus long dans l'interface que l'autre carte. Par exemple, la carte 76 pourrait être utilisée pendant une journée entière alors que l'autre carte 74 ne serait utilisée que pour une période relativement courte, par exemple une dizaine de minutes. Ainsi, pendant une journée la carte 76 resterait à demeure dans le logement 84 alors que le logement 82 pourrait accueillir successivement un grand nombre de cartes à puce.

Le fond 36, 64 ou 104 de chacun des logements 28, 56, 58, 82 ou 84 de chacun des modes de réalisation décrits est avantageusement muni d'un micro-contact (non représenté sur les figures) qui permet de détecter la présence et/ou le bon positionnement de la carte à puce dans son logement.

Les figures 5a, b, c, d représentent une évolution de l'exemple de la Figure 4 dans lequel il n'y a qu'un logement apte à recevoir les deux cartes à puce. Comme dans les exemples précédents, l'interface comprends un module 120 destiné à être logé dans un lecteur de carte, un embout 121 comprenant une fente 122 apte à recevoir les deux cartes, et un logement 123 dans lequel les cartes sont positionnées en utilisation. Le logement est rendu plus étroit à un point par les moyens d'une saillie 124 qui s'avance de la surface interne supérieure 125 du logement et qui divise le logement en deux parties 126, 127. La saillie 124, la surface interne inférieure 128 et les bords latéraux du logement servent à positionner une première carte 130 dans le logement comme la Figure 5c le montre, l'extrémité de la carte venant en butée contre le fond 131 du logement 123. Dans cette position les plages de contact 132 de la carte se trouvent directement en- dessous et en contact avec les contacts affleurants 133 de l'interface. La carte est calée entre la saillie et la surface interne inférieure du logement, qui maintiennent fermement la carte dans le logement.

Le logement pourra être formé en deux étapes ou avec une surface interne supérieure qui descend, par exemple, pour rendre l'espace plus étroit vers le fond du logement et afin de décaler les cartes dans le logement.

La deuxième carte sera insérée dans la fente entre la surface supérieure de la première carte et la surface interne supérieure du logement qui servent de moyens de guidage. La saillie 124 sert à arrêter le progrès de la carte dans le logement afin que la carte soit positionnée avec ses plages de contact en-dessous des contacts affleurants 136 de l'interface. Pour éviter le frottement d'une carte sur l'autre, une feuille intercalaire métallique (qui n'est pas montrée dans les figures 5) peut être ajoutée dans le logement pour séparer le logement en deux parties et pour guider les deux cartes. La feuille a une épaisseur très fine mais est très rigide et se positionne dans le plan horizontal entre les deux cartes. Comme la Figure 5a le montre, les deux cartes traversent l'embout et se prolongent dans le module.

Comme dans l'exemple de la Figure 4, les contacts affleurants 133 et 136 sont reliés à un circuit imprimé demeuré dans l'interface et aux bornes d'un connecteur à broches se situant à l'extrémité de l'interface. Dans ce mode de réalisation, les cartes à puce sont décalées dans le logement et sont orientés dans la même direction avec leurs plages de contact en face des contacteurs affleurants dans la surface interne supérieure du logement. Ce mode de réalisation possède l'avantage que les contacteurs sont reliés ou intégrés dans un seul circuit imprimé qui est positionné au-dessus du logement dans l'interface.

Selon d'autres modes de réalisation les contacteurs pour la première ou deuxième carte peuvent être formés dans la surface interne inférieure du logement. En plus, le logement peut avoir la même largeur partout, les cartes étant superposées dos à dos dans le logement avec leurs contacts face aux contacteurs affleurants situés dans les surfaces supérieures et inférieures du logement.

A partir des modes de réalisation et exemples qui viennent d'être décrits, on peut imaginer aisément d'autres modes de réalisation sans sortir du cadre de la présente invention. Sur les figures 4, l'embout 78 pourrait contenir plusieur logements 82 superposés les uns aux autres de façon à pouvoir connecter simultanément à l'interface plusieurs cartes à puce 74. De la même façon, les modes de réalisations et exemples représentés sur les figures 2, 3 et 5 pourraient être très facilement modifiés pour que plus de deux cartes à puces puissent être connectées simultanément à l'interface. Les modes de réalisation décrits comportent un module qui a la forme et les dimensons d'une carte PCMCIA du type 2 mais il est bien évident qu'un autre type peut être utilisé. De plus, et comme indiqué dans l'introduction, le module de l'interface peut prendre toute autre forme et dimensions adaptées à un lecteur de carte que l'on veut accoupler avec une ou plusieurs cartes à puce.

Les modes de réalisation des figures 2 à 4, en ce que l'embout ne présente pas la même épaisseur que le module, ne sont pas couverts par la revendication 1.

## Revendications

1. Interface portable entre au moins une carte à puce électronique (26, 52, 54, 75, 76, 130) munie de plages de contact électriques (33, 66, 88, 98, 132, 135) et un lecteur de carte, l'interface étant enfichable dans le lecteur de carte et comprenant :
- un module ayant une longueur, une largeur et une épaisseur, le module étant destiné à être logé dans le lecteur de carte et comportant à une extrémité de la longueur du module des moyens enfichables (16) de liaison électrique avec ledit lecteur de carte,
- un embout comportant une fente (24, 48, 50, 122) pour l'introduction de ladite carte à puce, et
- un logement (28, 56, 58, 82, 84, 123) de forme sensiblement plane, destiné à recevoir au moins partiellement ladite carte à puce et traversant au moins en partie ledit embout à partir de ladite fente, ledit logement comportant des moyens de guidage et de positionnement (34, 36, 60, 102, 104, 125, 128) de ladite carte à puce ainsi que des moyens de connexions électriques (32, 68, 70, 86, 96, 133, 136) avec lesdites plages de contact électrique de la carte à puce,
- le module (10, 80, 120) étant de forme sensiblement parallélépipédique rectangle conforme à la norme PCMCIA et possèdent une largeur correspondant sensiblement à la largeur de ladite carte à puce,
- l'embout (18, 46, 78, 121) étant solidaire de l'autre extrémité longitudinale du module (10, 80, 120) et opposé aux moyens enfichables de liaison électrique, l'embout étant de largeur supérieure à la largeur du module,
- l'épaisseur de l'embout est la même que celle du module.

2. Interface selon la revendication 1 **caractérisée en ce que** les moyens de guidage et de positionnement sont constitués par les bords latéraux (34, 60, 62, 102) et les surfaces internes supérieures (17, 59a, 59b, 101, 125) et inférieures (19, 61a, 61b, 103, 128) du logement.

3. Interface selon l'une des revendications précédentes **caractérisée en ce que** les moyens de positionnement comportent en outre le fond (36, 64, 104) du logement.

4. Interface selon l'une des revendications précédentes **caractérisée en ce que** lesdits moyens de connexion électrique comportent une pluralité de contacteurs (32, 68, 70, 86, 96, 133. 136) qui sont situés en regard et en contact desdites plages de contact de la carte à puce lorsque cette dernière est positionnée dans ledit logement.

5. Interface selon l'une des revendications précédentes **caractérisée en ce que** ledit logement (28, 56, 58) est entièrement contenu à l'intérieur dudit embout, lesdits moyens de connexion électrique (32, 68, 70) étant alors situés dans ledit embout.

6. Interface selon l'une des revendications 1 à 4 **caractérisée en ce que** ledit logement (84) traverse de part en part ledit embout (78) et se prolonge dans ledit module, lesdits moyens de connexion électrique (96) étant alors situés dans ledit module.

7. Interface selon la revendication 5, **caractérisée en ce qu'**il comporte plusieurs logements (56, 58) superposés. chacun pouvant accueillir une carte à puce électronique.

8. Interface selon la revendication 7 **caractérisée en ce que** lesdits logements sont orientés selon des plans sensiblement parallèles.

9. Interface selon la revendication 7 **caractérisée en ce que** lesdits logements sont orientés selon des plans sécants.

10. Interface selon les revendications 5 et 6 **caractérisée en ce qu'**elle comporte plusieurs logements (82, 84), chaque logement étant décalé par rapport à l'autre.

11. Interface selon l'une des revendications 1-6, **caractérisée en ce qu'**elle comprend un seul logement (123) ayant une fente (122) apte à accueillir plusieurs cartes à puce électronique.

12. Interface selon la revendication 11, **caractérisée en ce que** le logement (123) devient plus étroit (124) suivant la longueur de l'interface afin que les cartes à puce insérées dans le logement soient décalées l'une par rapport à l'autre.

13. Interface selon l'une des revendications précédentes **caractérisée en ce qu'**elle comporte en outre un circuit intégré (38) situé dans ledit module et reliant lesdits moyens de connexion électrique aux-dits moyens enfichables de liaison électrique avec ledit lecteur de carte.

14. Interface selon l'une des revendications précédentes **caractérisée en ce que** les bords (20, 22) de l'embout (18) en contact avec le module forment une butée destinée à venir en contact avec le lecteur de carte lorsque l'interface est positionnée dans le lecteur de carte.

15. Interface selon l'une des revendications précédentes **caractérisée en ce que** le module et l'embout sont formés d'une seule pièce.

## Patentansprüche

1. Tragbare Schnittstelle zwischen wenigstens einer Karte mit elektronischem Chip (26, 52, 54, 75, 76, 130), die mit elektrischen Kontaktbereichen (33, 66, 88, 98, 132, 135) versehen ist, und einem Kartenleser, wobei die Schnittstelle in den Kartenleser einsteckbar ist und enthält:
- ein Modul mit einer Länge, einer Breite und einer Dicke, wobei das Modul dazu vorgesehen ist, im Kartenleser aufgenommen zu werden, und an einem Ende einsteckbare Mittel (16) zur elektrischen Verbindung mit dem Kartenleser aufweist,
- ein Ansatzstück, das einen Schlitz (24, 48, 50, 122) zum Einführen der Chipkarte enthält;
- einen Aufnahmesitz (28, 56, 58, 82, 84, 123) mit im wesentlichen ebener Form, der dazu vorgesehen ist, die Chipkarte wenigstens teilweise aufzunehmen, und, beginnend bei dem Schlitz, wenigstens zum Teil durch das Ansatzstück verläuft, wobei der Aufnahmesitz Führungs- und Positionierungsmittel (34, 36, 60, 102, 104, 125, 128) für die Chipkarte sowie elektrische Anschlußmittel (32, 68, 70, 86, 96, 133, 136) für die elektrischen Kontaktbereiche der Chipkarte enthält, wobei
- das Modul (10, 80, 120) eine im wesentlichen parallelepipedische Rechteckform gemäß der Norm PCMCIA hat und eine Breite besitzt, die im wesentlichen der Breite der Chipkarte entspricht;
- das Ansatzstück (18, 46, 78, 121) am anderen longitudinalen Ende des Moduls (10, 80, 120) gegenüber den einsteckbaren elektrischen Verbindungsmitteln befestigt ist, wobei das Ansatzstück eine Breite besitzt, die größer als die Breite des Moduls ist;
- die Ansatzstückdicke diegleiche ist wir die des Moduls.

2. Schnittstelle nach Anspruch 1, **dadurch gekennzeichnet, daß** die Führungsund Positionierungsmittel durch die seitlichen Ränder (34, 60, 62, 102) sowie die oberen Innenflächen (17, 59a, 59b, 101, 125) und unteren Innenflächen (19, 61a, 61b, 103, 128) des Aufnahmesitzes gebildet sind.

3. Schnittstelle nach einem der vorangehenden Ansprüche, **dadurch gekennzeichnet, daß** die Positionierungsmittel außerdem den Boden (36, 64, 104) des Aufnahmesitzes umfassen.

4. Schnittstelle nach einem der vorangehenden Ansprüche, **dadurch gekennzeichnet, daß** die elektrischen Anschlußmittel mehrere Kontakteinrichtungen (32, 68, 70, 86, 96, 133, 136) enthalten, die sich gegenüber den Kontaktbereichen der Chipkarte befinden und mit diesen in Kontakt sind, wenn diese im Aufnahmesitz positioniert ist.

5. Schnittstelle nach einem der vorangehenden Ansprüche, **dadurch gekennzeichnet, daß** der Aufnahmesitz (28, 56, 58) vollständig innerhalb des Ansatzstücks enthalten sind, wobei sich die elektrischen Anschlußmittel (32, 68, 70) dann im Ansatzstück befinden.

6. Schnittstelle nach einem der Ansprüche 1 bis 4, **dadurch gekennzeichnet, daß** der Aufnahmesitz (84) durch das Ansatzstück (78) verläuft und in das Modul verlängert ist, wobei sich die elektrischen Anschlußmittel (96) dann im Modul befinden.

7. Schnittstelle nach Anspruch 5, **dadurch gekennzeichnet, daß** sie mehrere übereinander angeordnete Aufnahmesitze (56, 58) enthält, wovon jeder eine Karte mit elektronischem Chip aufnehmen kann.

8. Schnittstelle nach Anspruch 7, **dadurch gekennzeichnet, daß** die Aufnahmesitze längs im wesentlichen paralleler Ebenen orientiert sind.

9. Schnittstelle nach Anspruch 7, **dadurch gekennzeichnet, daß** die Aufnahmesitze längs sich schneidender Ebenen orientiert sind.

10. Schnittstelle nach den Ansprüchen 5 und 6, **dadurch gekennzeichnet, daß** sie mehrere Aufnahmesitze (82, 84) enthält, wovon jeder in bezug auf den anderen versetzt ist.

11. Schnittstelle nach einem der Ansprüche 1-6, **dadurch gekennzeichnet, daß** sie einen einzigen Aufnahmesitz (123) enthält, der einen Schlitz (122) besitzt, der mehrere Karten mit elektronischem Chip aufnehmen kann.

12. Schnittstelle nach Anspruch 11, **dadurch gekennzeichnet, daß** der Aufnahmesitz (123) in Längsrichtung der Schnittstelle schmäler (124) wird, damit die in den Aufnahmesitz eingeschobenen Chipkarten relativ zueinander versetzt sind.

13. Schnittstelle nach einem der vorangehenden Ansprüche, **dadurch gekennzeichnet, daß** sie außerdem eine integrierte Schaltung (38) enthält, die sich in dem Modul befindet und die elektrischen Anschlußmittel mit den einsteckbaren Mitteln für die elektrische Verbindung mit dem Kartenleser verbindet.

14. Schnittstelle nach einem der vorangehenden Ansprüche, **dadurch gekennzeichnet, daß** die Ränder (20, 22) des Ansatzstücks (18), die mit dem Modul in Kontakt sind, einen Anschlag bilden, der dazu vorgesehen ist, mit dem Kartenleser in Kontakt zu gelangen, wenn die Schnittstelle im Kartenleser positioniert wird.

15. Schnittstelle nach einem der vorangehenden Ansprüche, **dadurch gekennzeichnet, daß** das Modul und das Ansatzstück einteilig ausgebildet sind.

## Claims

1. A portable interface between at least one electronic smart card (26, 52, 54, 75, 76, 130), provided with electrical contact tabs (33, 66, 88, 98, 132, 135), and a card reader, the interface being pluggable in the card reader and comprising:
- a module having a length, a width and a thickness, the module being designed to be received in the card reader and including pluggable electrical connection means (16) at one end of the length of the module for connection with said card reader;
- an endpiece including a slot (24, 48, 50, 122) for insertion of said smart card; and
- a housing (28, 56, 58, 82, 85, 123) of substantially plane shape for receiving at least a portion of said smart card and passing through at least a portion of said endpiece from said slot, said housing including guide and positioning means (34, 36, 60, 102, 104, 125, 128) for said smart card, and electrical connection means (32, 68, 70, 86, 96, 133, 136) with said electrical contact tabs of the smart card,
- the module (10, 80, 120) being substantially in the shape of a rectangular parallelepiped, complies with the PCMCIA standard, and having a width corresponding substantially to the width of said smart card;
- the endpiece (18, 46, 78, 121) being secured to the other longitudinal end of the module (10, 80, 120) opposite from the pluggable electrical connection means, the width of the endpiece being greater than the width of the module;
- the endpiece thickness being same as the module thickness.

2. An interface according to claim 1, **characterized in that** the guide and positioning means are constituted by the side edges (34, 60, 62, 102) and the top and bottom inside surfaces (17, 59a, 59b, 101, 125; 19, 61a, 61b, 103, 128) of the housing.

3. An interface according to either preceding claim, **characterized in that** the positioning means further include an end (36, 64, 104) of the housing.

4. An interface according to any preceding claim, **characterized in that** the electrical connection means comprise a plurality of contactors (32, 68, 70, 86, 96, 133, 136) situated facing and in contact with said contact tabs of the smart card when said card is in position in said housing.

5. An interface according to any preceding claim, **characterized in that** said housing (28, 56, 58) is contained entirely within said endpiece, said electrical connection means (32, 68, 70) then being situated in said endpiece.

6. An interface according to any one of claims 1 to 4, **characterized in that** said housing (84) passes right through said endpiece (78) and extends into said module, said electrical connection means (96) then being situated in said module.

7. An interface according to claim 5, **characterized in that** it includes a plurality of superposed housings (56, 58), each being capable of receiving an electronic smart card.

8. An interface according to claim 7, **characterized in that** said housings occupy planes that are substantially parallel.

9. An interface according to claim 7, **characterized in that** said housings occupy planes that intersect.

10. An interface according to claims 5 and 6, **characterized in that** it includes a plurality of housings (82, 84) said housings being mutually offset.

11. An interface according to any one of claims 1 to 6, **characterized in that** it has a single housing (123) with a slot (122) suitable for receiving a plurality of electronic smart cards.

12. An interface according to claim 11, **characterized in that** the housing (123) becomes narrower (124) along the length of the interface so that the smart cards inserted in the housing are mutually offset.

13. An interface according to any preceding claim, **characterized in that** it further includes an integrated circuit (38) situated in said module and connecting said electrical connection means to said pluggable electrical connection means for connection with said card reader.

14. An interface according to any preceding claim, **characterized in that** the edges (20, 22) of the endpiece (18) in contact with the module form an abutment designed to come into contact with the card reader when the interface is positioned in the card reader.

15. An interface according to any preceding claim, **characterized in that** the module and the endpiece are formed as a single part.
